# EUROPÄISCHE PATENTSCHRIFT

(11) **EP 3 106 009 B1**
(45) Veröffentlichungstag und Bekanntmachung des Hinweises auf die Patenterteilung: **11.09.2019**
(21) Anmeldenummer: 16001303.3
(22) Anmeldetag: 09.06.2016
(51) Int. Cl.: A01B 45/02, A01D 34/68, A01D 34/74

(54) **GARTENPFLEGEGERÄT IN FORM EINES VERTIKUTIERERS, EINES MULCHMÄHERS O. DGL. EINRICHTUNG**
GARDEN CARE APPARATUS IN THE FORM OF A SCARIFIER, A MULCHING MOWER OR SIMILAR DEVICE
APPAREIL DE JARDINAGE EN FORME DE SCARIFICATEUR, D'UNE TONDEUSE HACHEUSE OU DISPOSITIF SIMILAIRE

(30) Priorität: 19.06.2015 DE 102015109895
(43) Veröffentlichungstag der Anmeldung: 21.12.2016
(73) Patentinhaber: Tielbürger, Dirk, 32369 Rahden (DE)
(72) Erfinder: Tielbürger, Dirk, 32369 Rahden (DE)
(74) Vertreter: Busse & Busse

(56) Entgegenhaltungen:
- WO-A2-01/31992
- GB-A- 1 455 240
- GB-A- 1 460 272
- US-A- 4 336 760

## Beschreibung

Die Erfindung betrifft ein Gartenpflegegerät in Form eines Vertikutierers o. dgl. motorbetriebene Einrichtungen gemäß dem Oberbegriff des Anspruchs 1.

Aus DE 43 39 623 C1 ist ein in Form eines Vertikutierers ausgebildetes Gartenpflegegerät bekannt, wobei nur eine Stützachse mit zwei Rädern ein den Antrieb und das Bearbeitungswerkzeug aufweisendes Gehäuse abstützt. Dabei ist vorlaufend dem Bearbeitungswerkzeug des von Hand geschobenen Systems eine auf dem Boden abstützbare Absenkeinrichtung vorgesehen. Diese Einrichtung wirkt mittels einer randseitigen Zugstange auf eine Kupplungseinheit im Bereich des Antriebsmotors, so dass über eine Kulissenführung am Ende der Zugstange eine Schwenkbewegung der Absenkeinrichtung zum Betätigen eines Spannrades genutzt werden kann. Mit dieser Verbindungskonstruktion wird eine Sicherungseinrichtung geschaffen, mit der die Eingriffsstellung bzw. die Entkupplungsstellung des Antriebs gesteuert wird. Sämtliche Bauteile dieser mechanischen Sicherung bilden dabei ein unter einer Abdeckhaube befindliches System mit verschleißbelasteten Bauteilen, so dass die Sicherungskontrolle durch den Bediener nicht möglich ist und die hohen Belastungen ausgesetzten Kulissenteile in der Langzeitstabilität Nachteile aufweisen.

In der gattungsbildenden Schrift US 4,336,760 A ist eine Maschine zur Erdbearbeitung vorgeschlagen, deren permanent mit dem Antriebsmotor verbundenes Werkzeug dadurch in der Tiefenlage verstellt wird, dass ein Stützrad mittels einer Gestängebaugruppe von Hand verlagert werden kann. Das Stützrad ist dazu über einen Stützschenkel zu einem Schwenklager geführt, an dem auch ein Stellhebel der Gestängebaugruppe angreift.

Die Erfindung befasst sich mit dem Problem, ein verbessertes Gartenpflegegerät zu schaffen, bei dem mit vergleichsweise geringem technischem Aufwand die Sicherheitsanforderungen einfacher erfüllt werden, das System eine für den Bediener schnelle Kontrolle der Sicherungs- und Funktionslagen ermöglicht und dabei die wesentlichen Sicherungsbauteile insgesamt gegen raue Betriebsbedingungen unempfindlich sind.

Die Erfindung löst diese Aufgabe mit einem Gartenpflegegerät mit den Merkmalen des Anspruchs 1. Weitere vorteilhafte Ausgestaltungen ergeben sich aus den Ansprüchen 2 bis 12.

Das Gartenpflegegerät ist in Form eines Vertikutierers o. dgl. von Hand im Bereich eines Bedienhebels an einem Führungsholm steuerbare Einrichtung ausgebildet. Deren mittels eines Motors antreibbares Bearbeitungswerkzeug ist in eine bodennahe Arbeitsstellung bringbar, so dass danach durch Betätigung einer Kupplung im Bereich des Antriebsmotors die Rotation des Werkzeugs auslösbar ist. Das erfindungsgemäß verbesserte Gerät ist als eine auf zwei beabstandeten Radachsen mit entsprechenden Rollrädern abgestützte Rolleinrichtung ausgebildet. Zwischen diesen beiden Radachsen wird eine das Fahrgestell teilende Teilungsebene definiert, derart, dass eine vordere Stützeinheit mit der ersten Radachse relativ zu einem Basisgehäuse mit der zweiten Radachse um eine gemeinsame Querachse verlagerbar ist. Im Bereich dieses Basisgehäuses sind die an sich bekannten Antriebsbauteile sowie die zweite Radachse und das Gestänge des Führungsholms mit dem Bedienhebel vorgesehen.

Das Konzept geht davon aus, dass die vordere Stützeinheit aus einer insbesondere mechanisch gesicherten Transportstellung - durch einen vergleichsweise einfachen Lösevorgang - vom Bediener in eine beabsichtigte Arbeitsstellung schwenkbar ist. Das kombinierte Zusammenwirken der beiden Baugruppen im Bereich des als Schwenkstruktur zusammenwirkenden Basisgehäuses mit der Stützeinheit sieht vor, dass die "zwischengeordnete" Stellbaugruppe sowohl mit der relativ verlagerbaren Stützeinheit im Bereich der "Sicherung" als auch mit der Kupplung des Motors zusammenwirkt. Damit wird insgesamt zwischen Basisgehäuse und Stützeinheit eine "aktive" Sicherheitsverbindung definiert, die bei Betätigung des Bedienhebels und des Führungsholms entsprechend aktiviert bzw. deaktiviert werden kann.

Bei der Handbedienung des Systems im Bereich des zumindest einen Bedienhebel aufweisenden Führungsholms ist vorgesehen, dass ausgehend von diesem mit nach unten gerichteter Armkraft eine mit Hebelwirkung verstärkte Kippstellung des gesamten Gerätes - unter Abstützung auf der zweiten Radachse des Basisgehäuses bzw. dessen Rädern - möglich ist. In dieser Lage sind durch Betätigung des Bedienhebels die Sicherungsbauteile der "schwenkbaren" Stützeinheit entriegelbar. Erst danach kann - diesem Entriegelungsprozess überlagert - eine Betätigung der Kupplungsteile erfolgen, so dass die beabsichtigte Rotation des Bearbeitungswerkzeuges nur in einer vom Bediener als sicher eingeschätzten Arbeitsstellung ausgelöst werden kann.

Eine optimale Ausführung des vorbeschriebenen Konzeptes sieht vor, dass die Stellbaugruppe als integrales Bauteile mit einer eine Spannrolle der Keilriemen-Kupplung abstützenden und schwenkbar im Bereich des Basisgehäuses gehaltenen Steuerplatte versehen wird. Diese Steuerplatte ist im Wesentlichen parallel zu einer Seitenwand des Basisgehäuses angeordnet, so dass innenseitig die Verbindung zu dem auf dem Basisgehäuse befindlichen Antriebsmotor herstellbar ist. Dabei können die weiteren Bauteile der Stellbaugruppe wahlweise innen- oder außenseitig der Steuerplatte vorgesehen sein.

Die zweckmäßige Konstruktion sieht vor, dass die in Längsrichtung der Geräteanordnung einerseits über eine Stellfeder mit einem Bowdenzug des Stellhebels verbundene Steuerplatte andererseits ein zu einem Sicherungshebel im Bereich der Stützeinheit gerichtetes Verbindungsteil aufweist. Damit sind die für die Steuerung der "Doppelfunktion" der Steuerplatte wesentlichen Verbinder aufgezeigt. Gleichzeitig wird deutlich, dass der Sicherungshebel über die Wirkmechanik der Stellbaugruppe zumindest aus seiner gesicherten Lage gelöst werden kann.

Das System wird mittels des im Bereich des Führungsholms vorgesehenen Stellhebels mit kurzen Hubwegen beeinflusst. Dabei ist zur Optimierung im Bereich der Stellbaugruppe vorgesehen, dass die Spannwirkung der zwischen Bowdenzug und Steuerplatte spannbaren Stellfeder auf den Stellweg des zum Sicherungshebel verlaufenden Verbindungsteils so einstellbar ist, dass variierbare "Zugwirkungen" über die Steuerplatte umgesetzt werden. Eine vorteilhafte Ausführung sieht vor, dass zusätzlich zu der den Bowdenzug erfassenden Stellfeder als anderseitiges Verbindungsteil eine Rückholfeder vorgesehen wird. Dabei ist vorgesehen, dass die Stellfeder eine härtere Einstellung als die vergleichsweise weiche Rückholfeder aufweist und damit bei Auslösung des Systems eine "Vorrangstellung" der unmittelbar mit dem Bowdenzug bedienbaren Stellfeder erreicht ist.

Das Konzept des über die Steuerplatte bedienbaren Sicherungshebels zur vorderen Stützeinheit hin sieht vor, dass der Sicherungshebel mit seiner vorderen Stirnkante unmittelbar im Bereich einer die beiden Räder der Stützeinheit verbindenden Querstrebe anlegbar ist. Damit kann ein kraft- und formschlüssiger Verbindungsaufbau hergestellt werden, wobei durch entsprechende Konturierung der Querstrebe und des stirnseitigen Endes des Sicherungshebels eine "Zwangsführung" in die jeweilige Sicherungsposition vorgegeben wird.

Zur Abstützung der Bauteile des Antriebs mit Kupplung sowie der Bauteile im Bereich der Stellbaugruppe mit Sicherungshebel ist am Seitenrand des Basisgehäuses eine parallel zur Gerätelängsmittelebene verlaufende Seitenplatte vorgesehen.

Ein besonderer Vorteil der erfindungsgemäßen Stellbaugruppen-Konstruktion ergibt sich daraus, dass die Bauteile der Stellbaugruppe nahezu vollständig oberhalb des Basisgehäuses und der Stützeinheit so angeordnet werden, dass eine vom Bediener einsehbare Überwachungslage erreicht ist. Neben einer schnellen Kontrolle der vorgesehenen Verbindungspositionen ist durch diese "offene" Einbausituation auch eine schnelle Kontrolle des Verschleißzustandes möglich, und ein denkbarer Wechsel von Einzelteilen kann mit vergleichsweise geringem Aufwand erfolgen.

Weitere Einzelheiten und vorteilhafte Ausgestaltungen der Erfindung ergeben sich aus der nachfolgenden Beschreibung und der Zeichnung, in der ein Ausführungsbeispiel des erfindungsgemäßen Gartenpflegegerätes in geteilter Ausführung mit Basisgehäuse und Stützeinheit dargestellt ist. In der Zeichnung zeigen:
- Fig. 1: eine Seitenansicht des Gartenpflegegerätes in gesicherter Gebrauchslage,
- Fig. 2: eine Seitenansicht ähnlich Fig. 1 mit entriegelter Position im Bereich einer zentralen Stellbaugruppe,
- Fig. 3: eine vergrößerte Seitenansicht des Gerätes gemäß Fig. 2, und
- Fig. 4: eine perspektivische Vorderansicht des Gerätes mit Sicherungseinrichtung.

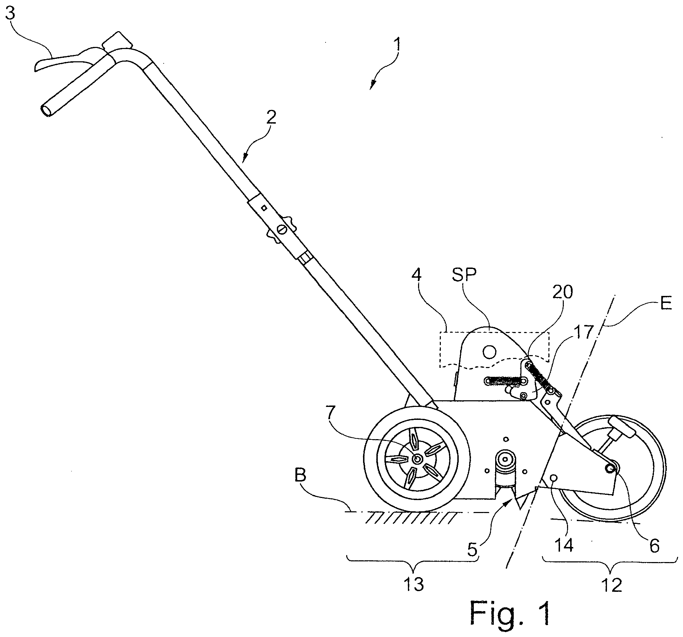

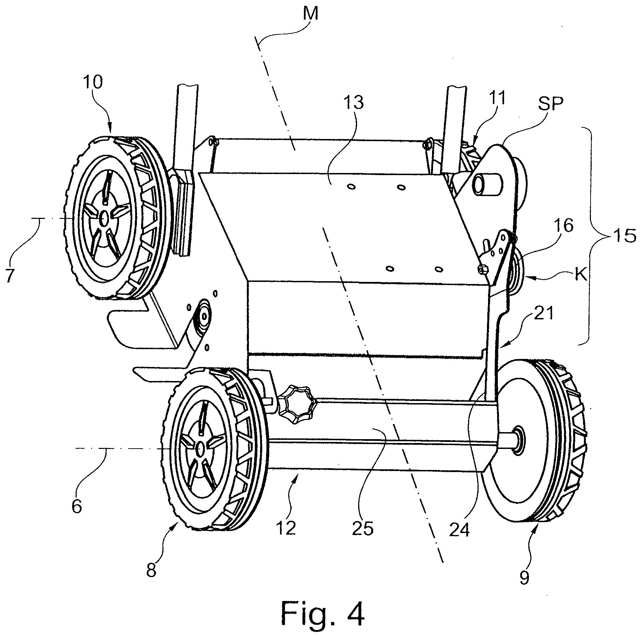

In Fig. 1 ist eine insgesamt mit 1 bezeichnete Einrichtung in Form eines Gartenpflegegerätes gezeigt, das als ein an sich bekannter Vertikutierer, Mulchmäher o. dgl. ausgeführt sein kann. Derartige Einrichtungen 1 sind von Hand bedienbar und weisen im Bereich eines oberen Führungsholms 2 jeweilige, zur Steuerung vorgesehene Stellhebel 3 auf. Dabei ist zumindest ein mittels eines schematisch dargestellten Motors 4 antreibbares Bearbeitungswerkzeug 5 in eine bodennahe Arbeitsstellung (bei B) bringbar. Durch Betätigung einer nicht näher dargestellten Kupplung K (Fig. 4) kann das Bearbeitungswerkzeug 5 in entsprechende Rotation versetzt werden.

Das erfindungsgemäße Konzept geht davon aus, dass das Gerät 1 in Form einer zwei beabstandete Radachsen 6, 7 mit paarweisen Rädern 8, 9 und 10, 11 aufweisenden Rolleinrichtung ausgebildet ist. Diese Konstruktion geht von einer in einer Teilungsebene E geteilten Bauteilstruktur aus, wobei eine mit der ersten Radachse 6 versehene vordere Stützeinheit 12 relativ zu einem die zweite Radachse 7 sowie die Antriebsstruktur 4 aufweisenden Basisgehäuse 13 um eine gemeinsame Querachse 14 verlagerbar ist.

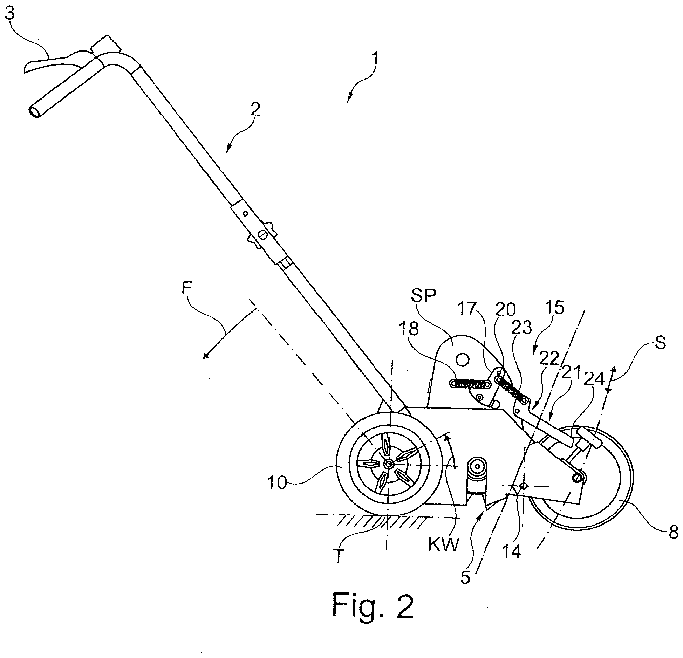

Eine vergleichende Betrachtung der Darstellungen in Fig. 1 und Fig. 2 macht deutlich, dass die vordere Stützeinheit 12 aus einer hier gegen Schwenkbewegungen gesicherten Transportstellung in eine um die Querachse 14 weitgehend frei bewegliche Arbeitsstellung schwenkbar ist (Pfeil S, Fig. 2). Zur Beeinflussung dieser Bewegung ist im Bereich zwischen vorderer Stützeinheit 12 und Basisgehäuse 13 - zusätzlich zur Querachse 14 - eine Stellbaugruppe 15 vorgesehen. Ausgehend von dem "geteilten System" mit Stützeinheit 12 und Basisgehäuse 13 ist die Stellbaugruppe 15 als zentrales Bindeglied so konzipiert, dass mit dieser Verbindungs- und Steuerstruktur - zumindest phasenweise bei Betätigung des am Führungsholm 2 befindlichen Stellhebels 3 - sowohl die Kupplung K am Motor 4 bedienbar als auch die Schwenkbewegung S im Bereich der Stützeinheit 12 auslösbar ist.

Die Wirkmechanik im Bereich des Stellhebels 3 ist dabei für eine vorteilhaft einfache Bedienung des Systems so ausgelegt, dass die Verlagerung der vorderen Stützeinheit 12 durch eine über den Führungsholm 2 einleitbare (Pfeil F) und dabei um einen Auflagepunkt T der Räder 10, 11 des Basisgehäuses 13 erfolgende Kippbewegung (Pfeil KW) aktivierbar ist. Diese Kippbewegung KW kann mit der Wirkmechanik im Bereich der Stellbaugruppe 15 sowohl auf eine jeweilige Kupplungsstellung K im Bereich des Motors 4 als auch eine Sicherungsstellung (Fig. 1, Fig. 2) im Bereich der Stützeinheit 12 übertragen werden.

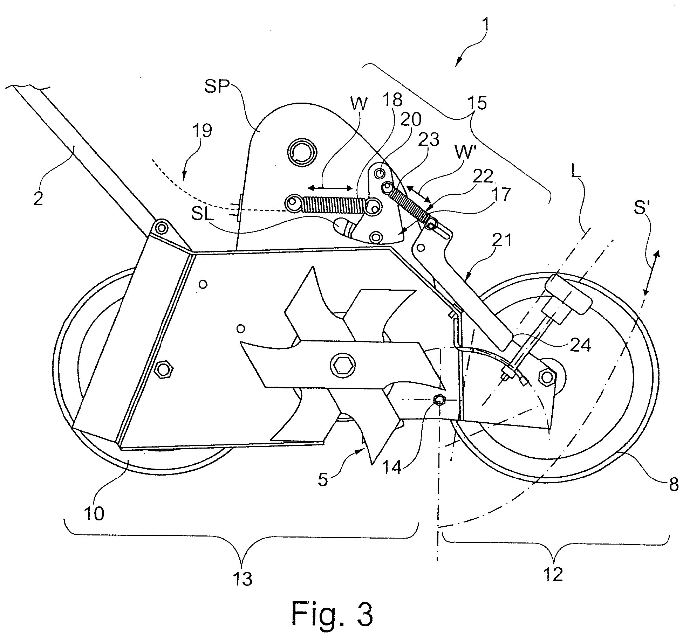

Eine zweckmäßige Konstruktion im Bereich der Stellbaugruppe 15 sieht vor, dass diese mit einer eine Spannrolle 16 der Keilriemen-Kupplung K (Fig. 4) abstützenden und schwenkbar im Bereich des Basisgehäuses 13 gehaltenen Steuerplatte 17 versehen ist. Aus der vergrößerten Seitenansicht in Fig. 3 wird deutlich, dass diese Steuerplatte 17 in Längsrichtung der Geräteanordnung außerdem einerseits über eine Stellfeder 18 mit einem Bowdenzug 19 des am Führungsholm 2 befindlichen Stellhebels 3 verbunden ist. Die im Bereich eines Stützlagers 20 im Bereich des Basisgehäuses 13 an einer Seitenplatte SP gehaltene Stellbaugruppe 15 ist andererseits mit einem zu einem Sicherungshebel 21 im Bereich der vorderen Stützeinheit 12 gerichteten Verbindungsteil 22 versehen.

Damit wird deutlich, dass im Bereich der Stellbaugruppe 15 eine mehrgliedrige Wirkmechanik aufgebaut ist, mit der ausgehend vom Stellhebel 3 der funktionale Sicherungshebel 21 zumindest aus seiner die Schwenkbewegung S unterbindenden Sicherungslage (Fig. 1) lösbar ist und dabei die Verlagerung in die gemäß Fig. 2 gezeigte Position möglich ist. Die Bauteile im Bereich des Antriebs 4 mit Kupplung K sowie die Bauteile der Stellbaugruppe 15 mit Sicherungshebel 21 sind dabei vorteilhaft an der Seitenplatte SP abgestützt. Diese erstreckt sich dabei im Wesentlichen parallel zur Längsmittelebene M neben der Seitenwand des Gehäuses 13.

Die Konstruktion im Bereich der Stellbaugruppe 15 ist dabei optimal so ausgeführt, dass die Spannwirkung der zwischen Bowdenzug 19 und Steuerplatte 17 spannbaren Stellfeder 18 auf einen jeweiligen Stellweg des zum Sicherungshebel 21 verlaufenden Verbindungsteils 22 einstellbar ist (Pfeil W, Pfeil W', Fig. 3). In der dargestellten Ausführung ist als Verbindungsteil 22 eine Rückholfeder 23 vorgesehen. Dabei wird das System insbesondere dadurch optimiert, dass die Stellfeder 18 eine härtere Einstellung als die Rückholfeder 23 aufweist. Denkbar ist in diesem Bereich auch, dass das Verbindungsteil 22 als eine feste Schenkelverbindung (nicht dargestellt) ausgebildet wird.

Aus der vergrößerten Darstellung in Fig. 3 wird deutlich, dass der Sicherungshebel 21 mit seiner vorderen Stirnkontur 24 unmittelbar im Bereich einer die beiden Räder 8, 9 der Stützeinheit 12 verbindenden Querstrebe 25 anlegbar ist (Fig. 4). Dabei sind die Teile dieser Stützkonstruktion in einer entsprechenden Schrägstellung gemäß Linie L (Fig. 3) so angeordnet, dass durch eine beim Sichern erfolgende Schwenkbewegung der vorderen Stützeinheit 12 - entgegen dem Uhrzeigersinn - eine "Zwangsarretierung" in der Sicherungslage (Fig. 3) erreicht wird. In dieser Lage bleibt die Kupplung K gelöst, da die Spannrolle 16 mit der Steuerplatte 17 in Abstandslage zum Keilriemen des Motors 4 gehalten ist.

Eine weitere Optimierung des vorbeschriebenen Systems sieht vor, dass die Bauteile der Stellbaugruppe 15 und die zugehörigen Verbindungsglieder im Wesentlichen oberhalb des Basisgehäuses 13 bzw. der Stützeinheit 12 in einer "Offenstellung" so angeordnet sind, dass eine für den Bediener einfach überschaubare Überwachungslage gegeben ist und während des Einsatzes der Einrichtung 1 die jeweilige Funktionslage einfach kontrolliert werden kann. Hinzu kommt, dass die Teile in der Einbaulage einfach zugänglich sind und damit notwendige Wartungs- und/oder Reparaturarbeiten mit geringem Aufwand möglich sind.

Die Einrichtung 1 ist für die Anwendung in variabel einstellbaren Transport- und Arbeitsstellungen vorgesehen. Über eine Betätigung des Stellhebels 3 in der Lage gemäß Fig. 1 wird der endseitig mit der Stellfeder 18 zusammenwirkende Bowdenzug 19 so betätigt, dass die Stellbaugruppe 15 im Bereich der Steuerplatte 17 entlang dem Langloch SL (Fig. 3) bewegt wird und der Keilriemen K des Motors 4 gespannt wird. Damit kann das Werkzeug 5 in Rotation versetzt werden. Die Steuerplatte 17 wirkt ihrerseits auf die Feder 22, deren anderes Ende mit dem Sicherungshebel 21 verbunden ist. In der aus Fig. 1 ersichtlichen Verbindungslage ist der Sicherungshebel 21 an der als Pendelstütze wirksamen Querstrebe 25 angelegt, so dass die arretierte Transportstellung erreicht ist. In dieser Position kann der Führungsholm 2 als eine Freigabekontrolle für den Bereich von Sicherungshebel 21 und Querstrebe 25 genutzt werden.

Ausgehend von dieser Stell-Konstruktion kann durch die beiden Federn 18 und 23 eine Systemsteuerung erreicht werden. Für den "Normalfall" ist die Feder 18 mit einer stärkeren Vorspannung beaufschlagt als die vergleichsweise weiche Feder 23 zum Sicherungshebel 21 hin. Wird nunmehr der Stellhebel 3 gemäß Fig. 1 nach unten gedrückt, zieht der Bowdenzug 19 die Feder 18, und die Steuerplatte 17 wird entlang dem Langloch SL zum Bediener nach hinten hin ausgelenkt. Gleichzeitig wird im Bereich K (Fig. 4) der nicht näher dargestellte Keilriemen gespannt, und der Motor 4 kann das Messer-Werkzeug 5 antreiben. In dieser Arbeitsstellung ist durch das Feder-Gegenhalter-System erreicht, dass der Sicherungshebel 21 in der gemäß Fig. 1 dargestellten Raststellung verbleibt und sich weiterhin auf der Kante der Querstrebe 25 abstützt. Damit ist das System der "Pendelstütze" in der Transportstellung arretiert, gleichzeitig kann jedoch eine Arbeitsbewegung des Systems durchgeführt werden.

Erst wenn man danach den Führungsholm 2 (in einer Ruhestellung mit Auflagepunkt T) nach unten drückt, kann die Querstrebe 25 den als Rasthebel anliegenden Sicherungshebel 21 freigeben, so dass danach die vordere Stützeinheit entsprechend der Schwenkbewegung S verlagert werden kann. Damit wird das Zusammenspiel der unterschiedlichen Federhärten im Bereich der Federn 18 und 23 deutlich.

Eine weitere Variation dieses Feder-Halte-Systems sieht vor, dass die Feder 23 als ein härteres System als die Feder 18 ausgebildet wird. Ebenso ist denkbar, die Feder 23 als ein starres Element auszuführen. Ausgehend von der Transportstellung (Fig. 1) wird nunmehr der Stellhebel 3 nach unten gedrückt und damit über den Bowdenzug 19 die Feder 18 betätigt. Dabei ist das System so wirksam, dass die Steuerplatte 17 in ihrer mittels der starren Feder 23 vorgespannten Lage verharrt. Drückt man nunmehr den Führungsholm 2 nach unten, wird der an der Querstrebe 25 anliegende Sicherungshebel 21 freigegeben, und damit wird auch die vordere Stützeinheit 12 schwenkbeweglich. Danach ist auch das Spann-System im Bereich der Federn 18 und 23 so beweglich, dass unter Wirkung der Feder 18 eine Schwenkbewegung im Bereich der Keilriemen-Kupplung K erfolgt und danach das Bearbeitungswerkzeug 5 einschaltbar ist. Damit wird deutlich, dass mit dem vorbeschriebenen System eine zusätzliche Sicherheitsfunktion erreicht wird, da die Freigabe des Motors 4 in der gemäß Fig. 1 ersichtlichen Transportstellung verhindert werden kann.

## Patentansprüche

1. Gartenpflegegerät in Form eines Vertikutierers, Mulchmähers o. dgl. von Hand bedienbare und im Bereich eines am Führungsholm (2) vorgesehenen Stellhebels (3) steuerbare Einrichtung (1), deren zumindest ein mittels eines Motors (4) antreibbares Bearbeitungswerkzeug (5) in eine bodennahe Arbeitsstellung bringbar und durch Betätigung einer Kupplung (K) in Rotation versetzbar ist, wobei das Gerät (1) in Form einer zwei beabstandete Radachsen (6, 7) aufweisenden Rolleinrichtung ausgebildet ist, deren mit einer ersten Radachse (6) versehene vordere Stützeinheit (12) relativ zu einem die zweite Radachse (7) sowie die Antriebsstruktur (4) aufweisenden Basisgehäuse (13) um eine gemeinsame Querachse (14) verlagerbar ist, **dadurch gekennzeichnet, dass** die vordere Stützeinheit (12) aus einer gesicherten Transportstellung in eine um die Querachse (14) weitgehend frei bewegliche Arbeitsstellung schwenkbar und im Bereich zwischen vorderer Stützeinheit (12) und Basisgehäuse (13) eine Stellbaugruppe (15) vorgesehen ist, mit der zumindest phasenweise bei Betätigung des am Führungsholm (2) befindlichen Stellhebels (3) sowohl die Kupplung (K) am Motor (4) bedienbar als auch die Schwenkbewegung (S) auslösbar ist.

2. Gerät nach Anspruch 1, **dadurch gekennzeichnet, dass** die Verlagerung der vorderen Stützeinheit (12) durch eine über den Führungsholm (2) einleitbare (Pfeil F) und dabei um einen Auflagepunkt (T) der Räder (10, 11) des Basisgehäuses (13) erfolgende Kippbewegung (KW) aktivierbar ist.

3. Gerät nach Anspruch 2, **dadurch gekennzeichnet, dass** die Kippbewegung (KW) mit einer Wirkmechanik im Bereich der Stellbaugruppe (15) sowohl auf eine jeweilige Kupplungsstellung (K) im Bereich des Motors (4) als auch eine Sicherungsstellung (bei 21) im Bereich der Stützeinheit (12) übertragbar ist.

4. Gerät nach einem der Ansprüche 1 bis 3, **dadurch gekennzeichnet, dass** die Stellbaugruppe (15) mit einer eine Spannrolle (16) der Keilriemen-Kupplung (K) abstützenden und schwenkbar im Bereich des Basisgehäuses (13) gehaltenen Steuerplatte (17) versehen ist, die in Längsrichtung der Geräteanordnung einerseits über eine Stellfeder (18) mit einem Bowdenzug (19) des Stellhebels (3) verbunden ist und andererseits ein zu einem Sicherungshebel (21) im Bereich der Stützeinheit (12) gerichtetes Verbindungsteil (22) aufweist.

5. Gerät nach Anspruch 4, **dadurch gekennzeichnet, dass** der Sicherungshebel (21) über die Wirkmechanik der Stellbaugruppe (15) zumindest aus einer gesicherten Lage lösbar ist.

6. Gerät nach Anspruch 4 oder 5, **dadurch gekennzeichnet, dass** die Spannwirkung der zwischen Bowdenzug (19) und Steuerplatte (17) spannbaren Stellfeder (18) auf den Stellweg des zum Sicherungshebel (21) verlaufenden Verbindungsteils (22) einstellbar ist.

7. Gerät nach Anspruch 6, **dadurch gekennzeichnet, dass** als Verbindungsteil (22) eine Rückholfeder (23) vorgesehen ist.

8. Gerät nach Anspruch 5 oder 6, **dadurch gekennzeichnet, dass** die Stellfeder (18) eine härtere Einstellung als die Rückholfeder (23) aufweist.

9. Gerät nach einem der Ansprüche 4 bis 8, **dadurch gekennzeichnet, dass** der Sicherungshebel (21) mit seiner vorderen Stirnkontur (24) unmittelbar im Bereich einer die beiden Räder der Stützeinheit (12) verbindenden Querstrebe (25) anlegbar ist.

10. Gerät nach einem der Ansprüche 1 bis9, **dadurch gekennzeichnet, dass** die Bauteile der Stellbaugruppe (15) oberhalb des Basisgehäuses (13) und der Stützeinheit (12) in einer vom Bediener einsehbaren Überwachungslage gehalten sind.

11. Gerät nach einem der Ansprüche 1 bis 10, **dadurch gekennzeichnet, dass** im Bereich des Basisgehäuses (13) eine als Tragteil mit diesem verbindbare Seitenplatte (SP) vorgesehen ist.

12. Gerät nach Anspruch 11, **dadurch gekennzeichnet, dass** an der im Wesentlichen parallel zur Gerätelängsmittelebene (M) verlaufenden Seitenplatte (SP) sowohl die Bauteile des Antriebs (4) mit Kupplung (K) als auch die Bauteile der Stellbaugruppe (15) abstützbar sind.

## Claims

1. Garden care apparatus in the form of a scarifier, mulching mower or similar manually operable device (1) that can be controlled in the region of an adjusting lever (3) provided on the guide bar (2), the at least one machining tool (5) of which, which can be driven by a motor (4), can be brought into a near-ground working position and can be rotated by actuating a coupling (K), the apparatus (1) being in the form of a rolling device having two spaced wheel axles (6, 7), the front support unit (12) of which, provided with a first wheel axle (6), being movable relative to a base housing (13) having the second wheel axle (7) and the drive structure (4) about a common transverse axis (14), **characterised in that** the front support unit (12) can be pivoted from a secured transport position into a working position which is largely freely movable about the transverse axis (14), and an adjustment assembly (15) is provided in the region between the front support unit (12) and the base housing (13), by means of which assembly, at least in phases when the adjusting lever (3) located on the guide bar (2) is actuated, both the coupling (K) on the motor (4) can be operated and the pivoting movement (S) can be triggered.

2. Apparatus according to claim 1, **characterised in that** the movement of the front support unit (12) can be activated by means of a tilting movement (KW) which can be initiated (arrow F) by means of the guide bar (2), thereby occurring about a resting point (T) of the wheels (10, 11) of the base housing (13).

3. Apparatus according to claim 2, **characterised in that** the tilting movement (KW), by means of an action mechanism in the region of the adjustment assembly (15), can be transmitted to a relevant coupling position (K) in the region of the motor (4) and a securing position (at 21) in the region of the support unit (12).

4. Apparatus according to any of claims 1 to 3, **characterised in that** the adjustment assembly (15) is provided with a control plate (17) which supports a tensioning roller (16) of the V-belt coupling (K) and is pivotally held in the region of the base housing (13), which plate, in the longitudinal direction of the apparatus arrangement, is connected to a Bowden cable (19) of the adjusting lever (3) by means of an adjustment spring (18) and has a connecting part (22) directed towards a safety lever (21) in the region of the support unit (12).

5. Apparatus according to claim 4, **characterised in that** the safety lever (21) can be released at least from a secured position by means of the action mechanism of the adjustment assembly (15).

6. Apparatus according to either claim 4 or claim 5, **characterised in that** the tensioning effect of the adjustment spring (18) which can be tensioned between the Bowden cable (19) and the control plate (17) can be adjusted on the adjustment path of the connecting part (22) which extends towards the safety lever (21).

7. Apparatus according to claim 6, **characterised in that** a return spring (23) is provided as the connecting part (22).

8. Apparatus according to either claim 5 or claim 6, **characterised in that** the adjustment spring (18) is harder to adjust than the return spring (23).

9. Apparatus according to any of claims 4 to 8, **characterised in that** the front end contour (24) of the safety lever (21) can be placed directly in the region of a cross strut (25) connecting the two wheels of the support unit (12).

10. Apparatus according to any of claims 1 to 9, **characterised in that** the components of the adjustment assembly (15) are held above the base housing (13) and the support unit (12) in a monitoring position that can be seen by the operator.

11. Apparatus according to any of claims 1 to 10, **characterised in that** a side plate (SP) is provided in the region of the base housing (13) as a carrying part which can be connected to said housing.

12. Apparatus according to claim 11, **characterised in that** both the components of the drive (4) having the coupling (K) and the components of the adjustment assembly (15) can be supported on the side plate (SP), which extends substantially in parallel with the apparatus longitudinal centre plane (M).

## Revendications

1. Appareil de jardinage sous la forme d'un scarificateur, d'une tondeuse mulching ou d'un autre dispositif (1) à actionnement manuel et pouvant être commandé par un levier de commande (3) prévu sur le guidon (2) dont au moins un outil de travail (5) pouvant être entraîné au moyen d'un moteur (4) peut être amené dans une position de travail près du sol et peut être mis en rotation par l'actionnement d'un embrayage (K), dans lequel l'appareil (1) est réalisé sous la forme d'un dispositif roulant présentant deux essieux (6, 7) espacés, dont l'unité de support avant munie d'un premier essieu (6) peut être déplacée par rapport à un carter de base (13) présentant le deuxième essieu (7) ainsi que la structure d'entraînement (4) autour d'un axe transversal commun (14), **caractérisé en ce que** l'unité de support avant (12) peut pivoter d'une position de transport verrouillée dans une position de travail avec une grande liberté de mouvement autour de l'axe transversal (14), et **en ce qu'**un module de commande (15) est prévu dans la zone entre l'unité de support avant (12) et le carter de base (13), permettant au moins par intermittence, en cas d'actionnement du levier de commande (3) situé sur le guidon (2), à la fois de commander l'embrayage (K) sur le moteur (4) et de déclencher le pivotement (S).

2. Appareil selon la revendication 1, **caractérisé en ce que** le déplacement de l'unité de support avant (12) peut être activé par un basculement (KW) pouvant être initié (flèche F) par l'intermédiaire du guidon (2) et s'effectuant alors autour d'un point de contact (T) des roues (10, 11) du carter de base (13).

3. Appareil selon la revendication 2, **caractérisé en ce que** le basculement (KW) peut être transmis par un mécanisme actif au niveau du module de commande (15) à la fois à une position d'embrayage respective (K) au niveau du moteur (4) et à une position verrouillée (en 21) au niveau de l'unité de support (12).

4. Appareil selon l'une quelconque des revendications 1 à 3, **caractérisé en ce que** le module de commande (15) est muni d'un plateau de commande (17) supportant une poulie de tension (16) de l'embrayage à courroie trapézoïdale (K) et maintenu pivotant au niveau du carter de base (13), qui est relié dans la direction longitudinale de l'agencement de l'appareil d'une part par un ressort de réglage (18) à un câble Bowden (19) du levier de commande (3) et présente d'autre part un raccord (22) orienté vers un levier de verrouillage (21) au niveau de l'unité de support (12).

5. Appareil selon la revendication 4, **caractérisé en ce que** le levier de verrouillage (21) peut être desserré par l'intermédiaire du mécanisme actif du module de commande (15) au moins à partir d'une position verrouillée.

6. Appareil selon la revendication 4 ou 5, **caractérisé en ce que** l'effet de tension du ressort de tension (18) pouvant être tendu entre le câble Bowden (19) et le plateau de commande (17) peut être réglé sur le trajet de commande du raccord s'étendant jusqu'au levier de verrouillage (21).

7. Appareil selon la revendication 6, **caractérisé en ce qu'**un ressort de rappel (23) est prévu en tant que raccord (22) .

8. Appareil selon la revendication 5 ou 6, **caractérisé en ce que** le ressort de réglage (18) présente un réglage plus dur que le ressort de rappel (23).

9. Appareil selon l'une quelconque des revendications 4 à 8, **caractérisé en ce que** le levier de verrouillage (21) peut être serré par son contour frontal avant (24) directement au niveau d'une barre transversale (25) reliant les deux roues de l'unité de support (12).

10. Appareil selon l'une quelconque des revendications 1 à 9, **caractérisé en ce que** les composants du module de commande (15) sont maintenus au-dessus du carter de base (13) et de l'unité de support (12) et dans une position de contrôle visible pour l'utilisateur.

11. Appareil selon l'une quelconque des revendications 1 à 10, **caractérisé en ce qu'**au niveau du carter de base (13) est prévue une plaque latérale (SP) pouvant être reliée à celui-ci comme un élément porteur.

12. Appareil selon la revendication 11, **caractérisé en ce qu'**à la fois les composants de l'entraînement (4) avec l'embrayage (K) et les composants du module de commande (15) peuvent être supportés sur la plaque latérale (SP) s'étendant substantiellement en parallèle au plan médian longitudinal (M) de l'appareil.
